# EUROPEAN PATENT SPECIFICATION

(11) **EP 2 801 901 B1**
(45) Date of publication and mention of the grant of the patent: **17.05.2017**
(21) Application number: 14159783.1
(22) Date of filing: 14.03.2014
(51) Int. Cl.: H04L 29/12

(54) **NETWORK STORAGE APPARATUS WITH BRIDGE FUNCTIONALITY**
NETZWERKSPEICHERVORRICHTUNG
APPAREIL DE STOCKAGE DE RÉSEAU

(30) Priority: 07.05.2013 JP 2013097392
(43) Date of publication of application: 12.11.2014
(73) Proprietor: Buffalo Inc., Nagoya-shi, Aichi 460-8315 (JP)
(72) Inventor: Araki, Masakazu, Nagoya-shi, Aichi 460-8315 (JP); Yamada, Yuuki, Nagoya-shi, Aichi 460-8315 (JP)
(74) Representative: SR Huebner - Munich Patentanwaltspartnerschaft mbB

(56) References cited:
- WO-A1-2010/001682
- US-A1- 2013 132 576

## Description

### Field of the Invention

The present disclosure relates to a network storage apparatus such as NAS (Network Attached Storage).

### Background of the Invention

A bridge apparatus is widely known in which two or more network interfaces are arranged to allow communication between the devices connected to each of these network interfaces.

A technology is disclosed in Japanese Patent Laid-open No. 2008-167022 for example in which, if a home agent communicating with a mobile terminal fails, wireless connection with the mobile terminal is once cut off so as to change the IP address of the mobile terminal from a home agent other than the failing home agent and make the mobile terminal try to reconnect to the network, thereby executing restoration of the failing home agent.

WO 2010/001682 A1 discloses a network communication apparatus comprising a first network interface for connection with a power line network and a second network interface for connection with an Ethernet network. The communication apparatus further comprises a bridge block which relays communication between the power line-side and the Ethernet-side. The communication apparatus further comprises a control part which, when no device is connected to the power line-side, stops the Ethernet-side interface, and, when all devices connected to the Ethernet-side are stopped, stops the power line-side interface.

In addition, a so-called network storage apparatus is known in which a hard disk drive (HDD) or a solid state drive (SSD) are arranged as storage means for storing data and, at the same time, two or more network interfaces are provided in order to make a device connected to each network interface store data into a HDD or the like as storage means and read data from this HDD or the like.

It should be noted however that, if two or more network interfaces are arranged as described above, no network storage apparatus has been known in which the capabilities as a bridge apparatus allowing the communication between the devices connected to these network interfaces can be configured.

If a so-called "player" that reads audio data for example from the above-mentioned network storage apparatus and decodes the audio data is connected, it is necessary for this player to normally function as a DHCP (Dynamic Host Configuration Protocol) client to receive IP address allocation from a device that functions as a DHCP server on a network to which this player is connected.

In the above-mentioned case, if the player is directly connected to one of the above-mentioned network interfaces (referred to as a first network interface for distinction) of a network storage apparatus in order to prevent the influence on audio data for example, this player is disabled for communication with a DHCP server connected to another network interface (referred to as a second network interface) of this network storage apparatus, thereby being disabled to receive IP address allocation.

Therefore, the present disclosure addresses the above-identified and other problems associated with related-art methods and apparatuses and solves the addressed problems by providing, as one object of the present disclosure, a network storage apparatus capable of operating as a bridge and executing IP address allocation to a device functioning as a DHCP client even if this DHCP client is directly connected to any one of network interfaces.

### Summary of the Invention

In carrying out the invention and according to one embodiment thereof, there is provided a network storage apparatus having a storing block for storing data. This network storage apparatus includes a first network interface, a second network interface, a bridge block configured to relay communication between devices connected to the network storage apparatus through the first network interface and the second network interface, and a control block configured to control activation and stop of the bridge block. The first network interface and the second network interface are network interfaces of the same type.

The above-mentioned setup allows the network storage apparatus to function as a bridge block to provide communication between devices connected to the network storage apparatus through the network interfaces. If the network storage apparatus is not to operate as a bridge block, the bridge function may be disabled.

The dependent claims relate to further developments. For instance, the control block stops an operation of the bridge block for the device to be connected to the network storage apparatus through the first network interface if a predetermined setting is
made, and activates a DHCP (Dynamic Host Configuration Protocol) server for setting an address enabling communication with the first network interface for the device connected to the network storage apparatus through the first network interface.

The above-mentioned setup allows IP address allocation to a device functioning as a DHCP client even if a device functioning as the DHCP client is connected to any one of the network interfaces with access to the DHCP server disabled.

Further, if the control block cannot accept address setting through the second network interface, then the control block stops an operation of the bridge block and activates the DHCP server for setting an address enabling communication with the first network interface for the device to be connected to the network storage apparatus through the first network interface.

The above-mentioned setup allows IP address allocation to a device functioning as the DHCP client even if the device functioning as the DHCP client is connected to any one of the network interfaces with access to the DHCP server disabled.

Also, in this configuration, the network storage apparatus tries to obtain an address through the second network interface after the address is set to the device connected through the first network interface by the activated DHCP server, and if the address is obtained, stops the activated DHCP server, activates the bridge block with a predetermined timing after the stop of the DHCP server, brings the network link down (disconnects the network) on the first network interface and then brings the network link up (reconnects the network) on the first network interface, and sets the address obtained through the second network interface to the device connected to the network storage apparatus through the first network interface.

The above-mentioned setup allows, if an external DHCP server has been restored, the acceptance of IP address allocation from this restored external DHCP server.

As described above and according to the present invention, if a device functioning as a DHCP client is directly connected to any one of network interfaces, an IP address may be allocated to the device functioning as the DHCP client.

### Brief Description of the Drawings

FIG. 1 is a block diagram illustrating an exemplary configuration of a network storage apparatus practiced as one embodiment of the present disclosure;
FIG. 2 is a functional block diagram illustrating the network storage apparatus practiced as one embodiment of the present disclosure;
FIG. 3 is a flowchart indicative of an exemplary operation of the network storage apparatus practiced as one embodiment of the present disclosure;
FIG. 4 is a flowchart indicative of another exemplary operation of the network storage apparatus practiced as one embodiment of the present disclosure;
FIG. 5 is a flowchart indicative of still another exemplary operation of the network storage apparatus practiced as one embodiment of the present disclosure; and
FIG. 6 is a schematic block diagram illustrating exemplary connection of the network storage apparatus practiced as one embodiment of the present disclosure.

### Detailed Description of Preferred Embodiments

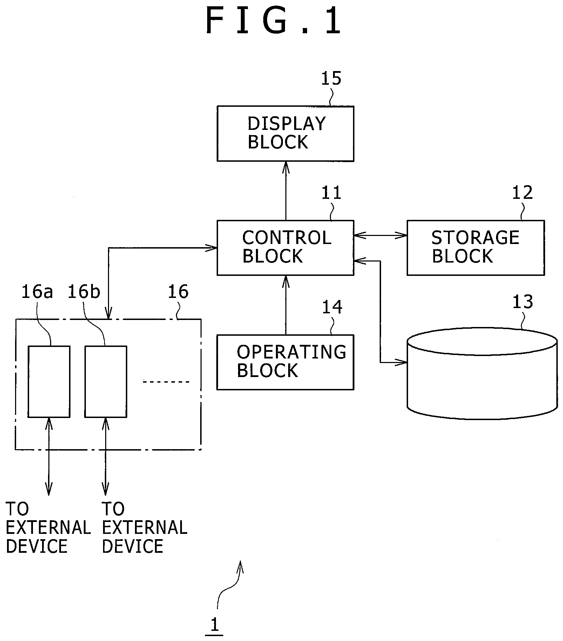

The technology disclosed herein will be described in further detail by way of embodiments thereof with reference to the accompanying drawings. A network storage apparatus 1 practiced as one embodiment of the present disclosure has a control block 11, a storage block 12, a data storage block 13, an operating block 14, a display block 15, and a communication block 16 as illustrated in FIG. 1. The communication block 16 has two network interfaces, a first network interface 16a and a second network interface 16b.

The control block 11 is a program control device such as a CPU for example and operates as instructed by programs stored in the storage block 12. In the present embodiment, this control block 11 functions as a bridge block that relays communication between devices connected via the first network interface 16a and the second network interface 16b and, operates also as a control block for starting or stopping an operation of this bridge block. The operation of this control block 11 will be detailed later.

The storage block 12 holds programs that are executed by the control block 11. Any one of these programs is provided as stored in a non-transitory computer-readable recording media such as a DVD-ROM for example or through communication means such as a network for example to be stored in the storage block 12. In addition, this storage block 12 also operates as a work memory of the control block 11.

The data storing block 13 is a disk device including a hard disk drive (HDD) or a solid-state drive (SSD) or a combination thereof and stores data received by the control block 11 from an external device through the communication block 16 in accordance with an instruction entered from the control block 11. The data stored in the data storing block 13 is read by the control block 11 to be transmitted to the external device through the communication block 16.

The operating block 14, made up of buttons or the like, accepts a user instructive operation and outputs information indicative of the contents of the accepted operation to the control block 11.

The communication block 16 includes two or more network interfaces as described above. The first network interface 16a and the second network interface 16b included in this communication block 16 transmit and receive data to/from external computer control devices connected thereto, through a network. For example, the first network interface 16a of the communication block 16 receives a read instruction from an external device and outputs this instruction to the control block 11. In this example, the communication block 16 of the network storage apparatus 1 is assumed to be a network interface based on the Ethernet (trademark) standards.

The following describes operations of the control block 11. In one embodiment of the present disclosure, the control block 11 functions as a bridge block relaying communication between devices connected to the network storage apparatus 1 through the first network interface 16a and the second network interface 16b. To be more specific, it is assumed that addresses belonging to a same network be set to the first network interface 16a, the second network interface 16b, and the devices connected to these network interfaces. Namely, if this network is a network that executes communication by use of IP (Internet Protocol), then the network address parts of the IP addresses set to the first network interface 16a, the second network interface 16b, and the devices connected these network interfaces take a same value.

In addition, this control block 11 determines whether or not to execute an operation as a bridge block. In one example of the present embodiment, this determination is executed in accordance with an instruction entered from the user. Namely, when the user gives an instruction that an operation as a bridge block is to be executed, the control block 11 executes an operation as a bridge block and get the MAC (Media Access Control) addresses of the devices connected to the first network interface 16a and the second network interface 16b, thereby generating a list of the obtained addresses. Next, when a broadcast frame is received through one of the network interfaces, the control block 11 transmits the received broadcast frame through other network interfaces (namely, the network interface other than one through which the broadcast frame has been received).

Also, receiving a unicast frame (a frame that includes the MAC address of a particular device as destination) through one of the first network interface 16a and the second network interface 16b, the control block 11 references, for this received unicast frame, the MAC address that is the destination of the received unicast frame and, if this MAC address is included in the list generated for other network interface (namely, the network interface other than one through which the unicast frame has been received), transmits this unicast frame through the network interface for which the MAC address is included in the list generated. This operation is substantially the same as the widely known function of a bridge block.

On the other hand, when the user gives an instruction that an operation as a bridge block is not to be executed and a broadcast frame is received through one of the first network interface 16a and the second network interface 16b, the control block 11 processes this received broadcast frame without transmitting the same through other network interface (namely, the network interface other than one through which the broadcast frame has been received).

In the above-mentioned case, receiving a unicast frame (a frame that includes the MAC address of a particular device as destination) through one of the first network interface 16a and the second network interface 16b, the control block 11 references, for this received unicast frame, the MAC address that is the destination of the received unicast frame. If the MAC address that becomes the destination concerned is the MAC address set to the first network interface 16a or the second network interface 16b through which the unicast frame has been received, the control block 11 receives the unicast frame concerned and processes the same. If the MAC address that became the destination concerned is not the MAC address set to one of the first network interface 16a and the second network interface 16b through which this unicast frame has been received, then the control block 11 discards this unicast frame.

As described above, in one embodiment of the present disclosure, the control block 11 determines whether or not to execute an operation as a bridge block in accordance with an instruction given by the user. If it is found that an operation as a bridge block is to be executed, the control block 11 activates the bridge block (namely, the control block 11 operates as instructed by a program that makes the control block 11 function as a bridge block). If it is found that an operation as a bridge block is not to be executed, then the control block 11 stops the bridge block (namely, the control block 11 does not operate as a bridge block).

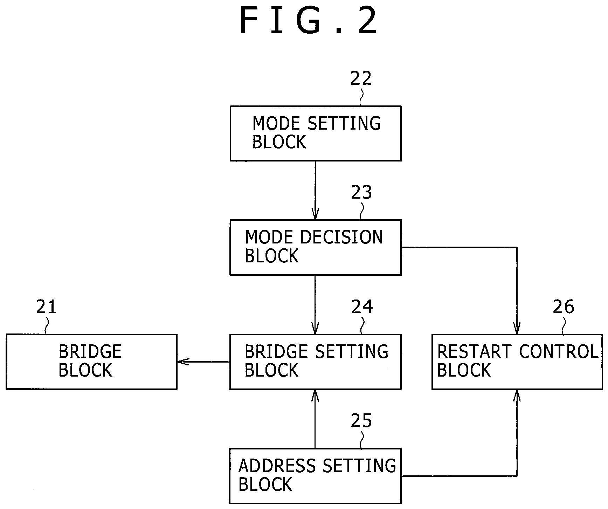

A control block 11 practiced as another embodiment of the present disclosure executes a program stored in a storage block 12 in order to operate as functionally including a bridge block 21, a mode setting block 22, a mode decision block 23, a bridge setting block 24, an address setting block 25, and a restart control block 26 as shown in FIG. 2.

The bridge block 21 is controlled in one of an activated state and a stop control state. In the activated state, the bridge block 21 gets, for the first network interface 16a and the second network interface 16b, the MAC (Media Access Control) addresses of the devices connected thereto and generates a list of the obtained MAC addresses. When a broadcast frame is received through one of the first network interface 16a and the second network interface 16b, the bridge block 21 transmits this received broadcast frame through the other network interface (namely, the network interface other than one through which the broadcast frame has been received).

In the activated state, receiving a unicast frame (a frame that includes the MAC address of a particular device as destination) through one of the first network interface 16a and the second network interface 16b, the bridge block 21 references the MAC address that became the destination of the received unicast frame. Then, if this referenced MAC address is included in the list generated for the other network interface (namely, the network interface other than one through which this unicast frame has been received), the bridge block 21 transmits this unicast frame through the other network interface (namely, the network interface other than one through which this unicast frame has been received). This operation is substantially the same as the widely known function as a bridge block.

In the stop control state, when a broadcast frame is received through the first network interface 16a or the second network interface 16b, the bridge block 21 processes this received broadcast frame without transmitting the same through the other network interface (namely, the network interface other than one through which this unicast frame has been received).

In the stop control case, receiving a unicast frame (a frame that includes the MAC address of a particular device as destination) through one of the first network interface 16a and the second network interface 16b, the bridge block 21 references the MAC address that is indicative of the destination of the received unicast frame. Then, if this referenced MAC address that is indicative of the destination of the unicast frame is the MAC address set to one of the first network interface 16a and the second network interface 16b that has received this unicast frame, the bridge block 21 receives and processes this unicast frame. If this referenced MAC address that is indicative of the destination of the unicast frame is not the MAC address set to one of the first network interface 16a and the second network interface 16b that has received this unicast frame, then the bridge block 21 discards this unicast frame.

When the user executes an instructive operation for setting the first network interface 16a to "the direct connect mode," the mode setting block 22 stores the information indicative that the mode of the first network interface 16a is "the direct connect mode." When the user executes an instructive operation for setting the first network interface 16a to "the normal mode," the mode setting block 22 stores the information indicative that the mode of the first network interface 16a is "the normal mode." In addition, when the mode is switched from "the direct connect mode" to "the normal mode," the mode setting block 22 makes the restart control block 26 execute restart processing of the first network interface 16a.

The mode decision block 23 determines whether the first network interface 16a is set to "the direct connect mode" or "the normal mode" by the instruction given by the user. Then, the mode decision block 23 outputs a result of this decision to the bridge setting block 24.

At the activation (namely, at the time of power turn-on or at the time of reset) of the network storage apparatus 1, the bridge setting block 24 puts the bridge block 21 into a predetermined state (namely, a default state). For one example, the bridge setting block 24 puts the bridge block 21 into the activated state at the activation of the network storage apparatus 1. Also, if the mode decision block 23 determines that the first network interface 16a is set to "the direct connect mode," the bridge setting block 24 puts the bridge block 21 into the stop control state and instructs the address setting block 25 to set an address to a device connected to the network storage apparatus 1 through the first network interface 16a.

Further, when information indicative of the failure of IP address setting on the side of the second network interface 16b is entered from the address setting block 25, the bridge setting block 24 puts the bridge block 21 into the stop control state and instructs the address setting block 25 to sets an address to the device connected to the network storage apparatus 1 through the first network interface 16a.

The address setting block 25 sets IP addresses to both the first network interface 16a and the second network interface 16b included in the communication block 16. Further, in accordance with an instruction from the bridge setting block 24, the address setting block 25 activates a DHCP server. The activated DHCP server transmits an IP address that has the same network address of the IP address allocated to the first network interface 16a to the device connected to the network storage apparatus 1 through the first network interface 16a, thereby allocating this IP address as the IP address of this device.

In addition, after setting the IP address to the device connected to the network storage apparatus 1 through the first network interface 16a by the above-mentioned activated DHCP server, the address setting block 25 repetitively tries to get an IP address through the second network interface 16b with predetermined timings (periodically for example). Then, if an IP address is obtained through the second network interface 16b, the address setting block 25 stops the activated DHCP server and puts the bridge block 21 into the activated state with a predetermined timing after The stop of the DHCP server. Next, the address setting block 25 instructs the restart control block 26 to restart the first network interface 16a. When the first network interface 16a is restarted, the address setting block 25 transmits the IP address obtained through the second network interface 16b to the device connected to the network storage apparatus 1 through the first network interface 16a, thereby setting this IP address to this device.

Receiving the instruction for restarting the first network interface 16a, the restart control block 26 brings the network link down (disconnects the network) on the first network interface 16a. Next, with a predetermined timing thereafter, the restart control block 26 brings the network link up (reconnects the network) on the first network interface 16a.

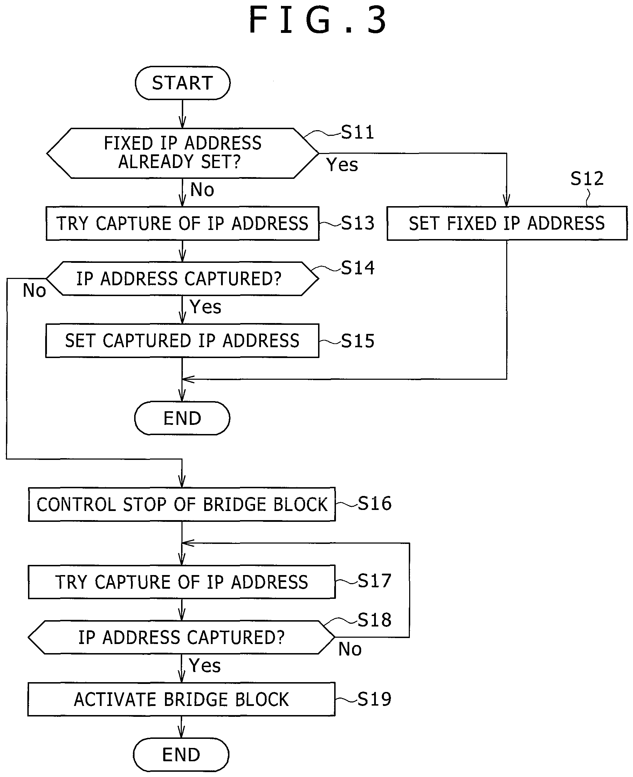

The network storage apparatus 1 practiced as one embodiment of the present disclosure has the configuration described above and operates as follows. At the time of activation (namely, at the time of power turn-on or at the time of reset), the network storage apparatus 1 executes the processing on the second network interface 16b as illustrated in FIG. 3. The network storage apparatus 1 starts the processing of activating the second network interface 16b and checks whether a fixed IP address is set to the second network interface 16b by the user (if the IP address has been manually set by the user) or not (step S11). If a fixed IP address is found set (Yes), then the network storage apparatus 1 sets this IP address as the IP address of the second network interface 16b (step S12), thereby terminating the processing.

On the other hand, if a fixed IP address is found not set in step S11 (No), then the network storage apparatus 1 tries to get an IP address from an external DHCP server through the second network interface 16b (step S13). To be more specific, the network storage apparatus 1 transmits a DISCOVER command for finding out a DHCP server through the second network interface 16b and waits for an IP address offer reply. If an IP address offer reply comes, the network storage apparatus 1 transmits a request to one of the replying DHCP server and waits for a acknowledgement reply. Next, if the acknowledgement replay comes, it is regarded that the network storage apparatus 1 has obtained an IP address.

The network storage apparatus 1 checks whether the IP address has been obtained or not by the trial done in step S13 (step S14). If the IP address is found obtained, then the network storage apparatus 1 sets the obtained IP address as the IP address of the second network interface 16b (step S15) and terminates the processing.

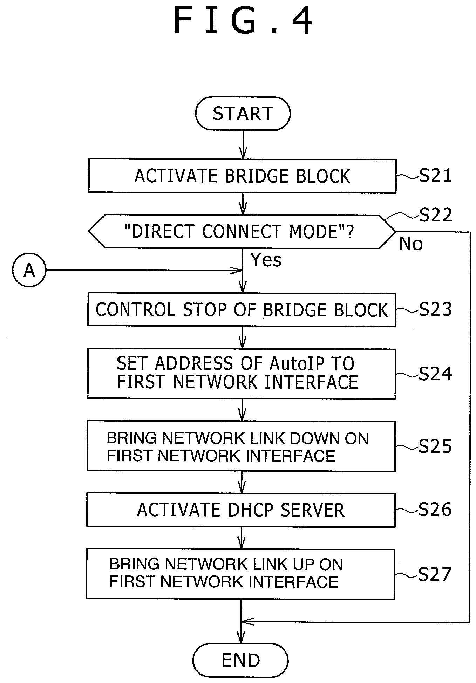

On the other hand, if an offer reply to a DISCOVER command is not received before the expiration time or an acknowledgement reply is not received before the expiration time after the transmission of a request, thereby resulting in the failure of IP address acquisition, then the network storage apparatus 1 regards this as the failure of IP address setting on the side of the second network interface 16b, thereby executing the processing (refer to FIG. 4) of stopping the function as a bridge block if functioning as a bridge block (step S16).

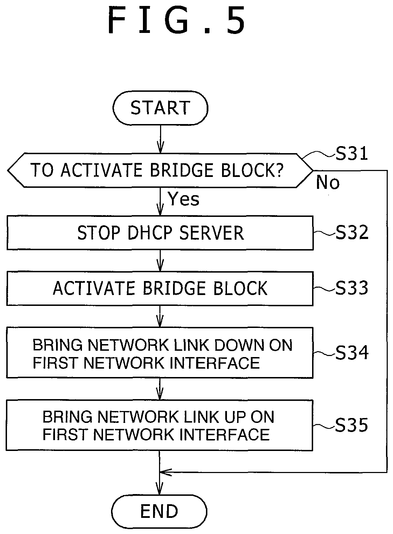

Next, the network storage apparatus 1 tries to get an IP address from an external DHCP server through the second network interface 16b (step S17) and determines whether the IP address has been obtained or not (step S18). If the IP address is found not obtained, the network storage apparatus 1 waits for a predetermined period of time and repetitively executes the processing of step S17. If the IP address is found obtained, then the network storage apparatus 1 executes the processing (refer to FIG. 5) of starting the function as a bridge block (step S19).

Also, the network storage apparatus 1 executes the processing for the first network interface 16a as illustrated in FIG. 4. It is assumed here that an operation as a bridge block be executed as default. The network storage apparatus 1 activates the bridge block 21 of control block 11 and controls the bridge block 21 to function as a bridge block (step S21). Next, the network storage apparatus 1 determines whether the first network interface 16a has been set by the user in a predetermined manner, namely, set to "the direct connect mode" or not ("the normal mode") in this example (step S22). If the first network interface 16a is found not set to "the direct connect mode" (No), then the network storage apparatus 1 terminates the processing.

In the above-mentioned case, the device connected to the first network interface 16a gets own IP address from a DHCP server on the network connected to the second network interface 16b through the network storage apparatus 1 functioning as a bridge.

If the first network interface 16a is found set by the user to "the direct connect mode" (Yes) or the execution of the processing for stopping the function as a bridge block is specified in the processing of step S16 in FIG. 3 (A in FIG. 4), then the network storage apparatus 1 puts the bridge block 21 of the control block 11 into the stop control state (step S23). Next, the network storage apparatus 1 sets a predetermined IP address to the first network interface 16a (step S24). The predetermined IP address here may be an IP address preselected from so-called link local addresses for example (an IP address selected by so-called AutoIP).

Next, the network storage apparatus 1 brings the network link down (disconnects the network) on the first network interface 16a (namely, puts the first network interface 16a into a communication disabled state) (step S25) and makes the control block 11 function as a DHCP server (activation of a DHCP server in step S26). It is assumed that the DHCP server to be activated here be set so as to distribute an IP address including the same network address as the IP address to be set to the first network interface 16a. In addition, if a request for IP address comes through the first network interface 16a, this DHCP server presents the IP address in response to this request but, if a request for IP address comes through the second network interface 16b, does not make a response to this request.

When the activation of the DHCP server has been completed, the network storage apparatus 1 brings the network link up (reconnects the network) on the first network interface 16a (puts the first network interface 16a into a communication enabled state) (step S27) and terminates the processing. These disconnection and reconnection operations (bringing the network link down and up on the first network interface 16a) allow the device connected to the network storage apparatus 1 through the first network interface 16a to recognize as if this device were physically disconnected and then physically reconnected, thereby requesting the DHCP server for an IP address. This request is transmitted to the control block 11 through the first network interface 16a to be processed by the DHCP server realized by the this control block 11. Namely, the IP address including the same network address as the IP address to be set by the DHCP server operating inside the network storage apparatus 1 to the first network interface 16a is set to the device connected to the network storage apparatus 1 through the first network interface 16a. Thus, the device connected to the network storage apparatus 1 through the first network interface 16a is made communicable to the network storage apparatus 1 and becomes ready for reading data stored in the network storage apparatus 1. In addition, data may also be stored in the network storage apparatus 1.

As described above, when an instruction is given to start the function as a bridge block in step S19 shown in FIG. 3, the network storage apparatus 1 determines whether or not to start the function as a bridge block (step S31). This decision may be executed by enquiring the user whether or not to start the function as a bridge block or may be executed if another condition, such as a request is made to an IP address other than the IP address allocated to the first network interface 16a by the device connected to the network storage apparatus 1 through the first network interface 16a is satisfied, for example.

If the network storage apparatus 1 determines that the function as a bridge block is to be started (Yes) when an instruction thereof is given by the user, for example, the network storage apparatus 1 instructs the control block 11 to stop the function as a DHCP server (step S32). Next, the network storage apparatus 1 sets the bridge block 21 of the control block 11 to an activated state with a predetermined timing after the stop of the DHCP server (step S33), brings the network link down (disconnects the network) on the first network interface 16a (puts the first network interface 16a into a communication disabled state) (step S34), and then brings the network link up (reconnects the network) on the first network interface 16a (puts the first network interface 16a into a communication enabled state) with a predetermined timing thereafter (step S35).

The network storage apparatus 1 then obtains an IP address to be set to the first network interface 16a from a DHCP server communicable through the second network interface 16b and sets the obtained IP address to the first network interface 16a.

Consequently, the device connected to the network storage apparatus 1 through the first network interface 16a recognizes as if this device were physically disconnected and then physically reconnected, requesting the DHCP server for an IP address. In this example, the device connected to the network storage apparatus 1 through the first network interface 16a gets the IP address from a DHCP server on the network connected to the second network interface 16b through the network storage apparatus 1 that functions as a bridge block.

It should be noted that during the operations of steps S34 and S35, access to the data stored in the network storage apparatus 1 by the device connected to the network storage apparatus 1 through the first network interface 16a is temporarily disabled. Namely, if the device connected to the network storage apparatus 1 through the first network interface 16a is a player that decodes and outputs the audio data stored in the network storage apparatus 1, for example, execution of any of the above-mentioned operations while the audio data is being read may possibly cause temporary noise on the playback of the audio data. So, in the present embodiment, in executing step S34, the network storage apparatus 1 may execute operations of steps S34 and following steps after the completion of data file reading, or, when an instruction for pausing the access to data is explicitly given by the user, the network storage apparatus 1 practiced as the present embodiment may execute operations of steps S34 and following steps.

If the network storage apparatus 1 is found not to start the function as a bridge block in step S31 shown in FIG. 5 (No), then the network storage apparatus 1 terminates the processing immediately.

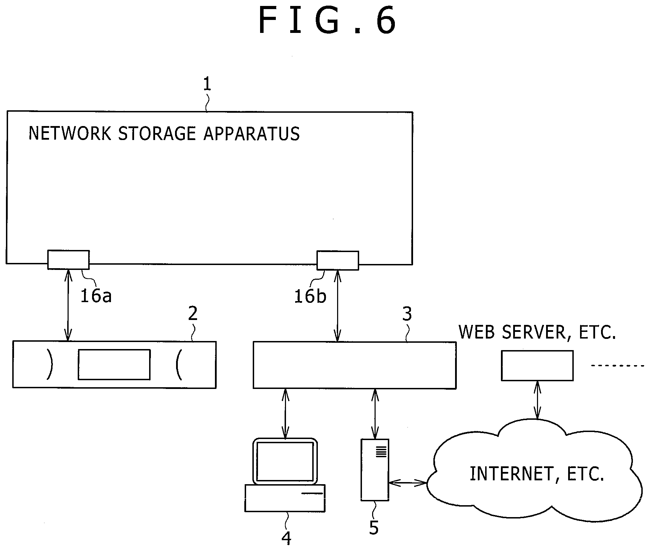

In one example of the present embodiment, a player 2 is connected to the network storage apparatus 1 through the first network interface 16a as illustrated in FIG. 6. In addition, the second network interface 16b is connected to a hub apparatus 3 which is connected to a PC 4 and a router 5.

The player 2 gets audio data from the network storage apparatus 1, decodes the obtained audio data, and outputs the decoded audio data. The PC 4 connected to the hub apparatus 3 is a personal computer and stores data into the network storage apparatus 1 and reads data therefrom. The router 5, connected to a WAN (Wide Area Network) such as the Internet for example, allows the PC 4 to access a web server and the like on the Internet through the hub apparatus 3. In addition, if the network storage apparatus 1 operates as a bridge block (namely, the bridge block 21 is in an activated state in the control block 11), the router 5 receives an access request for accessing a web server or a database server on the Internet from the player 2 through the network storage apparatus 1 and the hub apparatus 3 and transmits the received access request to the web server or database server on the Internet. In addition, the router 5 transmits the response received from the web server or database server on the Internet to the requesting player 2. To be more specific, this response is transmitted to the player 2 through the hub apparatus 3 and the network storage apparatus 1 operating as a bridge block.

In this example of the present embodiment, the router 5 may function as a DHCP server (hereafter referred to as an external DHCP server in order to make distinction from a DHCP server that is activated inside the network storage apparatus 1). This allows the control block 11 of the network storage apparatus 1 to get an IP address to be set to the player 2 (a device to be connected to the network storage apparatus 1 through the first network interface 16a) from this external DHCP server through the second network interface 16b.

To be more specific, if the network storage apparatus 1 practiced as the present embodiment is activated with the external DHCP server based on the router 5 put in a state where no IP address can be provided for some reason, then the network storage apparatus 1 tries to get an IP address through the second network interface 16b (it is assumed here that no fixed IP address be set in advance) but, because no IP address can be obtained from the external DHCP server based on the router 5, starts the processing of stopping the function as a bridge block.

To be more specific, even if "the direct connect mode" is not specified, the network storage apparatus 1 stops the function as a bridge block and sets an IP address based on AutoIP to the first network interface 16a. Then, the network storage apparatus 1 activates a DHCP server to provide an IP address communicable with the first network interface 16a (an IP address including the same network address as the IP address set to the first network interface 16a) to the player 2 by the activated DHCP server. This disables the player 2 to access servers on the Internet but enables the player 2 to access audio data stored in the network storage apparatus 1 and playback the audio data.

Then, when the external DHCP server based on the router 5 is recovered to allow the provision of an IP address, the network storage apparatus 1 displays a message for enquiring the user whether or not to activate the function as a bridge block. If the user executes an instructive operation for activating the function as a bridge block (namely, if the user desires to access a sever on the Internet from the player 2), then the network storage apparatus 1 stops the DHCP server activated therein and starts an operation as a bridge block. Next, the network storage apparatus 1 brings the network link down and then link up (disconnects and then reconnects the network) on the first network interface 16a to make the player 2 operate to recognize as if the player 2 were physically disconnected once from the network and then reconnected thereto.

Consequently, the player 2 gets an IP address from the external DHCP server based on the router 5 through the network storage apparatus 1 functioning as a bridge block and sets the obtained IP address, thereby becoming ready for accessing servers on the Internet through the router 5. Because the player 2 is also allowed to access the audio data stored in the network storage apparatus 1, the player 2 can playback the audio data.

In the description of the present embodiment above, the network storage apparatus 1 brings the network link down and link up (disconnects and then reconnects the network) on the network interface connected to the player 2, among the network interfaces 16a, 16b, and so on arranged inside the communication block 16 of the network storage apparatus 1, thereby making the player 2 recognize as if the player 2 were once physically disconnected from the network and then reconnected thereto. However, the present embodiment is not limited to this example. For example, in another example of the present embodiment, the control block 11 of the network storage apparatus 1 may display an instruction to the user onto the display block 15 to prompt the user to execute the bringing the network link down and up (disconnection and reconnection of the network) on the network interface of the player 2 by manually turning on and then off the power to the player 2, for example, instead of the disconnection and reconnection of the network interface arranged in the communication block 16 by the network storage apparatus 1 itself (operations in steps S25 and S27 or steps S34, S35 and so on) as described in the above-mentioned examples.

In the above-mentioned case, the control block 11 may execute the above-mentioned display and then stop the display after detecting the disconnection (link down) of the network interface of the player 2 and the reconnection thereof (link up).

In addition, receiving a disconnection (link down) instruction and/or a reconnection (link up) instruction from the network storage apparatus 1, the player 2 may execute disconnection (link down) and reconnection (link up) of the network interface of the player 2 in accordance with these instructions.

In the above-mentioned example, the network storage apparatus 1 instructs the player 2 to execute disconnection (link down) and/or reconnection (link up) instead of executing the disconnection (link down) and reconnection (link up) of the own network interface of the communication block 16 as described in examples described before (operations in steps S25 and S27 or steps S34, S35 and so on) the present example or by executing these disconnection and reconnection (link down and up). Then, the player 2 brings the network link down (disconnects the network) and then brings the network link up (reconnects the network) on the network interface of the player 2 in accordance with these instructions.

It should be noted that the instructions from the network storage apparatus 1 to the player 2 may be given through a network or, if the player 2 is connected to the network storage apparatus 1 through a so-called control line other than a network, these instructions (including the instructions on link down and link up) may be transmitted from the network storage apparatus 1 to the player 2 through this control line.

In the above-mentioned examples, the communication block 16 has the two network interfaces; the first network interface 16a and the second network interface 16b. It should be noted however that the communication block 16 may have more than two network interfaces. Further, at least some of these network interfaces of the communication block 16 may be switchable between "the normal mode" and "the direct connect mode."

In the above-mentioned case, the control block 11 executes the substantially the same processing as the first network interface 16a described above for each of the mode switchable network interfaces of the communication block 16.

Also, in the above-mentioned case, if there is at least one network interface of the communication block 16 set to "the normal mode" in addition to the first network interface 16a or there are two or more network interfaces of the communication block 16 set to "the normal mode," then the control block 11 may start the function as a bridge block in order to enable communication between a device connected to the network storage apparatus 1 through the network interface of the communication block 16 set to "the normal mode" and a device connected to the network storage apparatus 1 through the first network interface 16a or between devices connected to the network storage apparatus 1 through two or more network interfaces of the communication block 16 set to "the normal mode."

Further, in accordance with an example in which two or more "direct connect mode" settings are enabled, a configuration may be provided in which two or more pieces of audio data may be reproduced in a broadcasting manner as practiced in the broadcasting rooms of facilities such as schools.

## Claims

1. A network storage apparatus (1) having a storing block (13) for storing data, said network storage apparatus (1) comprising:
a first network interface (16a);
a second network interface (16b);
a bridge block configured to relay communication between devices connected to said network storage apparatus (1) through said first network interface (16a) and said second network interface (16b); and
a control block (11) configured to control activation and stop of said bridge block,
**characterized in that**
the first network interface (16a) and the second network interface (16b) are network interfaces of the same type.

2. The network storage apparatus (1) according to claim 1, **characterized in that**
said control block (11) is arranged to stop an operation of said bridge block for the device to be connected to said network storage apparatus (1) through said first network interface (16a) if said network storage apparatus sets a predetermined setting for the device to be connected to said network storage apparatus (1), and to activate a Dynamic Host Configuration Protocol server for setting an address enabling communication with said first network interface (16a) for the device connected to said network storage apparatus (1) through said first network interface (16a).

3. The network storage apparatus (1) according to claim 1, **characterized in that**
said control block (11) is arranged to stop an operation of said bridge block and to activate a Dynamic Host Configuration Protocol server for setting an address enabling communication with said first network interface (16a) for the device to be connected to said network storage apparatus (1) through said first network interface (16a), if said control block (11) cannot accept address setting through said second network interface (16b).

4. The network storage apparatus (1) according to claim 3, **characterized in that**
said network storage apparatus (1) is
arranged
to try to obtain an address through said second network interface (16b) for the device connected to said network storage apparatus (1) through said first network interface (16a) after address setting by said activated Dynamic Host Configuration Protocol server,
to stop said activated Dynamic Host Configuration Protocol server if the address is obtained,
to activate said bridge block with a predetermined timing after the stop of said Dynamic Host Configuration Protocol server,
to bring the network link down on said first network interface (16a) and then to bring the network link up on said first network interface (16a), and
to set the address obtained through said second network interface (16b) to the device connected to said network storage apparatus (1) through said first network interface (16a).

5. The network storage apparatus (1) according to any one of claims 1 to 4,
**characterized in that** the first network interface (16a) and the second network interface (16b) are Ethernet interfaces.

## Patentansprüche

1. Netzwerkspeichervorrichtung (1), die einen Speicherblock (13) zum Speichern von Daten umfasst, wobei die besagte Netzwerkspeichervorrichtung (1) Folgendes aufweist:
eine erste Netzwerkschnittstelle (16a);
eine zweite Netzwerkschnittstelle (16b);
einen Brückenblock, der dazu konfiguriert ist, die Kommunikation zwischen den Vorrichtungen, die mit der besagten Netzwerkspeichervorrichtung (1) verbunden sind, durch die besagte erste Netzwerkschnittstelle (16a) und die besagte zweite Netzwerkschnittstelle (16b) herzustellen; und
einen Steuerblock (11), der dazu konfiguriert ist, die Aktivierung und den Stopp des Brückenblocks zu steuern,
**dadurch gekennzeichnet, dass**
die erste Netzwerkschnittstelle (16a) und die zweite Netzwerkschnittstelle (16b) Netzwerkschnittstellen desselben Typs sind.

2. Netzwerkspeichervorrichtung (1) gemäß dem Anspruch 1 ist **dadurch gekennzeichnet, dass**
der besagte Steuerblock (11) so angeordnet ist, dass er einen Vorgang des besagten Brückenblocks stoppen kann, damit sich die Vorrichtung mit der besagten Netzwerkspeichervorrichtung (1) durch die besagte erste Netzwerkschnittstelle (16a) verbindet, wenn die besagte Netzwerkspeichervorrichtung eine vorbestimmte Einstellung festlegt, damit sich die Vorrichtung mit der besagten Netzwerkspeichervorrichtung (1) verbindet und damit sie einen Dynamischen Host-Konfigurationsprotokollserver aktiviert, um eine Adresse einzustellen, die die Kommunikation mit der besagten ersten Netzwerkschnittstelle (16a) für die Vorrichtung ermöglicht, die mit der Netzwerkspeichervorrichtung (1) durch die besagte erste Netzwerkschnittstelle (16a) verbunden ist.

3. Netzwerkspeichervorrichtung (1) gemäß dem Anspruch 1, **dadurch gekennzeichnet, dass**
der besagte Steuerblock (11) so angeordnet ist, dass er einen Vorgang des besagten Brückenblocks stoppen und einen Dynamischen Host-Konfigurationsprotokollserver aktivieren kann, um eine Adresse einzustellen, die die Kommunikation mit der besagten ersten Netzwerkschnittstelle (16a) für die Vorrichtung ermöglicht, die mit der Netzwerkspeichervorrichtung (1) durch die besagte erste Netzwerkschnittstelle (16a) verbunden ist, wenn der besagte Steuerblock (11) die Adresseinstellung durch die besagte zweite Netzwerkschnittstelle (16b) nicht annehmen kann.

4. Netzwerkspeichervorrichtung (1) gemäß dem Anspruch 3, **dadurch gekennzeichnet, dass**
die besagte Netzwerkspeichervorrichtung (1) so angeordnet ist, dass
sie versucht, eine Adresse durch die besagte zweite Netzwerkschnittstelle (16b) zu erhalten für die Vorrichtung, die mit der besagten Netzwerkspeichervorrichtung (1) durch die besagte erste Netzwerkschnittstelle (16a) verbunden ist, nach der Einstellung der Adresse durch den besagten aktivierten Dynamischen Host-Konfigurationsprotokollserver,
um den besagten aktivierten Dynamischen Host-Konfigurationsprotokollserver zu stoppen, wenn die Adresse erhalten wurde,
um den besagten Brückenblock mit einem vorbestimmten Zeitablauf nach dem Stoppen des besagten Dynamischen Host-Konfigurationsprotokollservers zu aktivieren,
um die Netzwerkverbindung an der besagten ersten Netzwerkschnittstelle (16a) abzubauen und die Netzwerkverbindung dann an der besagten ersten Netzwerkschnittstelle (16a) aufzubauen, und
um die durch die besagte zweite Netzwerkschnittstelle (16b) erhaltene Adresse an der Vorrichtung einzustellen, die mit der besagten Netzwerkspeichervorrichtung (1) durch die besagte erste Netzwerkschnittstelle (16a) verbunden ist.

5. Netzwerkspeichervorrichtung (1) gemäß einem der Ansprüche 1 bis 4,
**dadurch gekennzeichnet, dass** die erste Netzwerkschnittstelle (16a) und die zweite Netzwerkschnittstelle (16b) Ethernet-Schnittstellen sind.

## Revendications

1. Appareil de stockage sur réseau (1) possédant un bloc de stockage (13) en vue du stockage de données, ledit appareil de stockage sur réseau (1) comprenant :
une première interface de réseau (16a) ;
une seconde interface de réseau (16b) ;
un bloc de pontage configuré pour temporiser la communication entre des dispositifs connectés audit appareil de stockage sur réseau (1) par ladite première interface de réseau (16a) et ladite seconde interface de réseau (16b) ; et
un bloc de commande (1) configuré pour commander l'activation et l'arrêt dudit bloc de pontage,
**caractérisé en ce que**
la première interface de réseau (16a) et la seconde interface de réseau (16b) sont des interfaces de réseau du même type.

2. Appareil de stockage sur réseau (1) selon la revendication 1, **caractérisé en ce que**
ledit bloc de commande (11) est disposé pour arrêter un fonctionnement dudit bloc de pontage pour le dispositif à connecter audit appareil de stockage sur réseau (1) par ladite première interface de réseau (16a) si ledit appareil de stockage sur réseau définit un réglage prédéterminé pour le dispositif à connecter audit appareil de stockage sur réseau (1), et pour activer un serveur DHCP (Dynamic Host Configuration Protocol) pour le réglage d'une adresse permettant la communication avec ladite première interface de réseau (16a) pour le dispositif connecté audit appareil de stockage sur réseau (1) par ladite première interface de réseau (16a).

3. Appareil de stockage sur réseau (1) selon la revendication 1, **caractérisé en ce que**
ledit bloc de commande (11) est disposé pour arrêter un fonctionnement dudit bloc de pontage et pour activer un serveur DHCP (Dynamic Host Configuration Protocol) en vue du réglage d'une adresse permettant la communication avec ladite première interface de réseau (16a) pour le dispositif à connecter audit appareil de stockage sur réseau (1) par ladite première interface de réseau (16a), si ledit bloc de commande (11) ne peut pas accepter un réglage d'adresse par ladite seconde interface de réseau (16b).

4. Appareil de stockage sur réseau (1) selon la revendication 3, **caractérisé en ce que**
ledit appareil de stockage sur réseau (1) est disposé
pour essayer d'obtenir une adresse par ladite seconde interface de réseau (16b) pour le dispositif connecté audit appareil de stockage sur réseau (1) par ladite première interface de réseau (16a) après un réglage d'adresse par ledit serveur DHCP (Dynamic Host Configuration Protocol) activé,
pour arrêter ledit serveur DHCP (Dynamic Host Configuration Protocol) activé si l'adresse est obtenue,
pour activer ledit bloc de pontage avec une échéance prédéterminée après l'arrêt dudit serveur DHCP (Dynamic Host Configuration Protocol),
pour mettre le réseau en liaison descendante sur ladite première interface de réseau (16a), et ensuite pour mettre le réseau en liaison montante sur ladite première interface de réseau (16a), et
pour définir l'adresse obtenue par ladite seconde interface de réseau (16b) vers le dispositif connecté audit appareil de stockage sur réseau (1) par ladite première interface de réseau (16a).

5. Appareil de stockage sur réseau (1) selon une quelconque des revendications 1 à 4,
**caractérisé en ce que** la première interface de réseau (16a) et la seconde interface de réseau (16b) sont des interfaces Ethernet.
